# EUROPÄISCHE PATENTSCHRIFT

(11) **EP 3 092 418 B1**
(45) Veröffentlichungstag und Bekanntmachung des Hinweises auf die Patenterteilung: **24.03.2021**
(21) Anmeldenummer: 15700186.8
(22) Anmeldetag: 06.01.2015
(51) Int. Cl.: F16D 69/00, F16D 49/00, B61H 1/00, F16D 69/04

(54) **BREMSKLOTZ FÜR EINE SCHIENENRADBREMSE**
BRAKE SHOE FOR A RAIL VEHICLE WHEEL BRAKE
SABOT DE FREIN POUR FREIN DE ROUE FERROVIAIRE

(30) Priorität: 09.01.2014 DE 102014100174
(43) Veröffentlichungstag der Anmeldung: 16.11.2016
(73) Patentinhaber: Icer Rail S.L., 31013 Pamplona (ES)
(72) Erfinder: JANDL, Andres, 50767 Köln (DE)
(74) Vertreter: Kleine, Hubertus
(86) Internationale Anmeldenummer: PCT/EP2015/050089
(87) Internationale Veröffentlichungsnummer: WO 2015/104256

(56) Entgegenhaltungen:
- DE-A1-102010 031 889
- DE-A1-102012 103 196
- US-A1- 2002 125 081

## Beschreibung

Die Erfindung betrifft einen Bremsklotz für eine Schienenradbremse gemäß dem Oberbegriff des Anspruchs 1 sowie ein Verfahren zur Herstellung des Bremsklotzes.

Aus dem Stand der Technik ist eine Klotzbremse für Schienenfahrzeuge bekannt, mit einem Bremsklotz, der mittels einer Zuspannvorrichtung auf die Lauffläche eines Schienenrades gepresst werden kann.

Für die Betätigung der Klotzbremse ist eine Klotzhalterung vorgesehen, die so konzipiert ist, dass der Bremsklotz zur Erzeugung einer Reibkraft auf die Lauffläche des Schienenrades gepresst wird.

Bei einem gattungsgemäßen Bremsklotz besteht die Bremsklotzsohle aus einem Reibmaterial, das mit dem Belagträger durch Verkleben verbunden ist, wobei das Reibmaterial in die Öffnungen eines Traggitters eingedrückt ist, ebenso wie in randseitige Durchbrechungen einer Rückenplatte, mit der das Traggitter verbunden ist.

Zur Verbindung werden an der Rückenplatte auf der dem Traggitter zugewandten Seite Nietstifte angeschweißt, die nach einem Aufsetzen des Traggitters entsprechend verformt werden. Durch den gebildeten Nietkopf wird das Traggitter formschlüssig an der Rückenplatte gehalten.

Auf der dem Traggitter abgewandten Seite der aus Blech bestehenden Rückenplatte, die im Übrigen, ebenso wie die Bremsklotzsohle an die Krümmung der Lauffläche des Schienenrades angepasst ist, sind an den in Längsrichtung der Rückenplatte gesehen gegenüberliegenden Randbereichen Formelemente vorgesehen, die einer Verdrehsicherung gegenüber dem Klotzhalter dienen, an dem der Bremsklotz befestigt ist.

Diese Formelemente sind bislang durch Lochen und Verformen hergestellt, wodurch die Biegesteifigkeit der Rückenplatte ebenso beeinträchtigt wird, wie durch die erwähnten randseitigen Durchbrechungen.

Gerade bei den beim Bremsen auftretenden hohen mechanischen Belastungen, insbesondere auftretenden Biegekräften, die auch deshalb auf die Rückenplatte einwirken, weil das Material der Bremssohle die Belastungen nicht vollständig aufnehmen kann, kommt einer ausreichenden Stabilität der Rückenplatte eine besondere Bedeutung zu.

Dabei ist die Wahl einer größeren Dimensionierung, d.h. einer größeren Dicke der Rückenplatte insoweit keine Alternative als dies mit höheren Beschaffungs- und/oder Fertigungskosten verbunden ist.

Durch randseitige Aussparungen des Traggitters im Bereich der Durchbrechungen der Rückenplatte steht zur Verbindung des Traggitters mit der Bremssohle nur eine relativ geringe Kontaktfläche zur Verfügung, so dass die Befestigung der Bremssohle nicht in optimaler Weise erfolgt.

In der US 2002/0125081 A1 ist ein Bremsbelag für eine Scheibenbremse offenbart, mit einer Belagträgerplatte, an der mittels Nieten ein Traggitter gehalten ist, das wiederum der Befestigung eines Reibbelages dient. Dabei weist die dem Traggitter gegenüberliegende Rückseite der Belagträgerplatte keine Formelemente auf.

Ein vergleichbarer Bremsbelag ist in der DE 10 2010 031 889 A1 thematisiert, der ebenfalls bei einer Scheibenbremse zum Einsatz kommt und dessen Belagträgerplatte durch Tiefziehen eine Vertiefung aufweist, die ein Bett für einen Reibbelag bildet. Die dem Reibbelag abgewandte Rückseite der Belagträgerplatte weist ebenfalls keine Formelemente auf, während die dem Reibbelag zugewandte Vorderseite mit solchen Formelemente versehen ist.

Der Erfindung liegt die Aufgabe zugrunde, einen Bremsklotz der gattungsgemäßen Art so weiterzuentwickeln, dass er kostengünstiger herstellbar ist und bei verbesserter Funktionsfähigkeit seine Standzeit erhöht wird.

Diese Aufgabe wird durch einen Bremsklotz mit den Merkmalen des Anspruchs 1 sowie durch ein Verfahren zur Herstellung des Bremsklotzes gelöst.

Die Erfindung führt zunächst einmal zu einer wesentlich kostengünstigeren Herstellung des Belagträgers, insbesondere der Rückenplatte, da die Formelemente nunmehr ausschließlich durch Umformen bzw. Kaltverformen hergestellt werden.

Dabei sind sowohl die dem Traggitter zugewandt angeordneten, in Funktion Nieten bildenden Stifte wie auch die gegenüberliegenden, eine Verdrehsicherung mit dem Bremsklotzhalter bildenden Formelemente napfartig ausgebildet, was durch ein geeignetes Werkzeug in einem Arbeitsgang vorgenommen werden kann.

Im Gegensatz zum Stand der Technik bleibt die Rückenplatte damit im Wesentlichen vollflächig erhalten, so dass eine Beeinträchtigung der Belastbarkeit, insbesondere der Biegefestigkeit nicht erfolgt. Ganz im Gegenteil.

Die napfartig ausgebildeten Formelemente, zumindest die der Verdrehsicherung dienenden, dem Traggitter abgewandten, wirken im Sinne einer Sicke, so dass die Biegesteifigkeit eher erhöht wird.

Nach einer bevorzugten Weiterbildung der Erfindung ist die Rückenplatte im Randbereich der sich gegenüberliegenden Längsseiten durchbruchfrei gestaltet, d.h., der Materialfluss ist hier ununterbrochen.

Damit ist es besonders sinnvoll, gemäß der Erfindung, das Traggitter im Grundriss dem Grundriss der Rückenplatte anzupassen, so dass das Traggitter die Rückenplatte insoweit überdeckt.

Hierdurch wird eine gegenüber dem Stand der Technik wesentlich größere Klebfläche erreicht, die einen besseren Halt der Bremsklotzsohle am Traggitter zur Folge hat.

Nach dem Ausstülpen der Formelemente liegen die dem Traggitter zugewandten Formelemente zunächst als zylindrischer Hohlstift vor. Nach einem Auflegen des Traggitters, bei dem diese hohlzylindrischen Stifte das Traggitter durchtreten, werden die Stifte im Sinne einer Vernietung verformt, d.h., das freie Ende wird mittels eines geeigneten Nietwerkzeugs zu einem Kopf geformt.

Das Auflegen des Traggitters auf die Rückenplatte und das anschließende Formen der Nieten erfolgt in einem unmittelbar sich an die spanlose Bearbeitung der Rückenplatte anschließenden Arbeitsgang, wobei bedarfsweise gleichzeitig weitere Komponenten angebracht werden können.

Nach einem weiteren Gedanken der Erfindung ist vorgesehen, von der dem Traggitter zugewandten Seite aus gleichgerichtet zu den Formelementen zur Verdrehsicherung Positionsbolzen, ebenfalls durch Tiefziehen, auszubilden, wie dies insbesondere bei Verwendung der Belagträger an einer UIC- Bremsklotzsohle erforderlich sind.

Diese Positionsbolzen können ebenfalls in einem Arbeitsgang mit den Formelementen eingebracht werden.

Durch die gegenüber einer durchbrochenen Rückenplatte erhöhte Biegesteifigkeit ergibt sich eine verbesserte Standzeit des Bremsklotzes insgesamt, da der beim Bremsen aufzubringende Pressdruck nunmehr quasi ohne Verformung der Rückenplatte bzw. des Belagträgers aufgenommen wird, die dann ein sozusagen unnachgiebiges Widerlager bildet.

Zur Erhöhung der Standzeit trägt in diesem Zusammenhang auch bei, dass die Bremsklotzsohle keinem ungleichmäßigen Verschleiß unterliegt. Im Übrigen wird auch die Bremswirkung verbessert, da die Bremsklotzsohle nunmehr über die gesamte Fläche gleichmäßig beim Bremsen an der Lauffläche des Schienenrades reibend anliegt.

Die sich ergebende signifikante Erhöhung der Anzahl möglicher Bremsungen führt zu einer durchaus bemerkenswerten Kostenreduzierung, insbesondere der Betriebskosten, da die Intervalle eines Bremsklotzwechsels mit einem entsprechend hohen Montage- bzw. Demontageaufwand reduziert sind einschließlich der Beschaffungskosten für einen neuen Bremsklotz.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Bremsklotz nach der Erfindung in einer Seitenansicht
- Figur 2: eine Draufsicht auf einen Belagträger des Bremsklotzes
- Figur 3: eine Sicht auf die Unterseite der Belagträger.

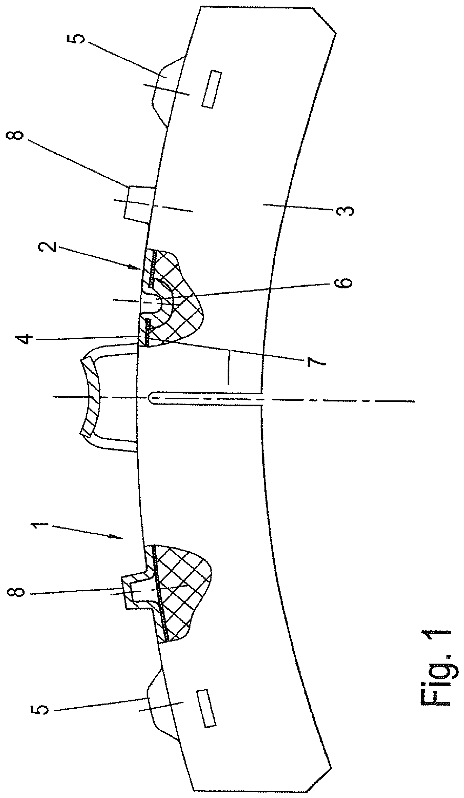

In der Figur 1 ist ein Bremsklotz 1 dargestellt, mit einem Belagträger 2 und einer daran befestigten Bremsklotzsohle 3, die vorzugsweise aus einem Verbundwerkstoff besteht und in Längserstreckung im Wesentlichen konkav gekrümmt ist.

Daran angepasst ist der Belagträger 2, der eine Rückenplatte 4 und ein damit verbundenes Traggitter 7 aufweist, an der die Bremsklotzsohle 3 befestigt ist.

Auf der dem Traggitter 7 gegenüberliegenden Seite der Rückenplatte 4 sind in den in Längsrichtung gesehen Endbereichen Formelemente 5 vorgesehen, die zur Verdrehsicherung des Bremsklotzes 1 mit einem nicht dargestellten Bremsklotzhalter korrespondieren.

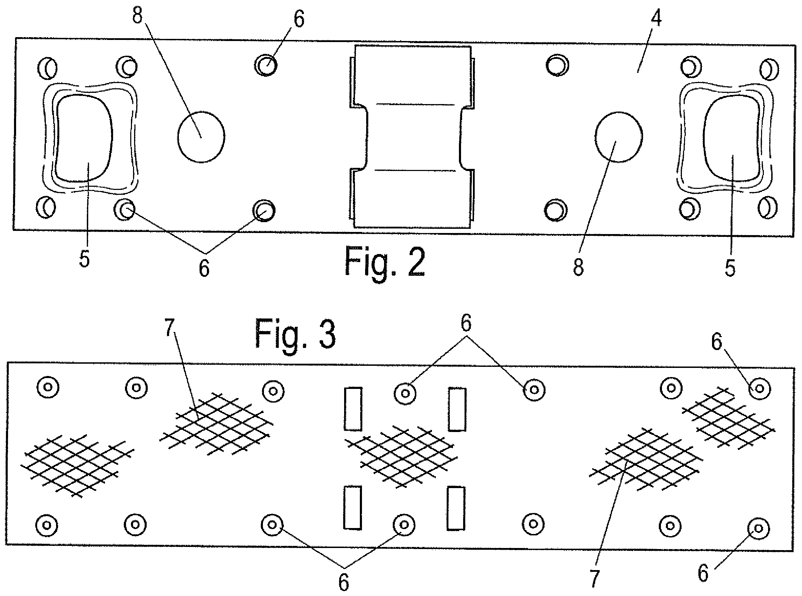

Diese Formelemente 5 sind deutlich auch in der Figur 2 zu erkennen, in der des Weiteren zu sehen ist, dass sie einen rechteckigen Grundriss aufweisen.

Auf dieser Seite der Rückenplatte 4 sind des Weiteren Positionsbolzen 8 vorgesehen, die ebenso wie die Formelemente 5 durch Tiefziehen hergestellt, d.h. ausgestülpt sind und die gleichfalls napfartig ausgebildet sind mit einer geschlossenen Außenfläche.

Zur Verbindung des Traggitters 7 mit der Rückenplatte 4 sind auf der dem Traggitter 7 zugewandten Seite der Rückenplatte 4 in der beschriebenen Art und Weise Nieten 6 eingebracht die vor einer Verbindung mit dem Traggitter 7 als hohlzylindrischer Stift vorliegen und nach dem Auflegen des Traggitters 7 derart verformt werden, dass sich ein Nietkopf bildet, so dass eine formschlüssige Verbindung zwischen dem Traggitter 7 und der Rückenplatte 4 hergestellt ist. Diese Gebrauchsposition ist in der Figur 1 im rechtsseitigen Ausschnitt erkennbar.

Nach einer insoweit Komplettierung des Belagträgers 2 erfolgt ein Auftrag der Bremsklotzsohle 3 und deren Verbindung mit dem Traggitter 7.

In der Figur 2 ist die der Bremsklotzsohle 3 gegenüberliegende Seite der Rückenplatte 4 dargestellt, wobei der Einzug der Nieten 6 bzw. deren Ausstülpung in entgegengesetzte Richtung deutlich erkennbar ist.

Die Anzahl der Nieten 6 ist im Übrigen wählbar und von den Verbindungserfordernissen mit dem Traggitter 7 abhängig.

Wie die Figur 3 sehr deutlich zeigt, entspricht der Grundriss des Traggitters 7 dem Grundriss der Rückenplatte 4, so dass diese nahezu vollständig überdeckt ist.

## Patentansprüche

1. Bremsklotz für eine Schienenradbremse mit einem eine in Längserstreckung konkav gekrümmte Bremsklotzsohle (3) tragenden Belagträger (2), der eine aus Blech bestehende Rückenplatte (4) und ein daran angeschlossenes Traggitter (7) aufweist, mit dem die Bremsklotzsohle (3) verbunden ist, wobei die Rückenplatte (4) auf der dem Traggitter (7) abgewandten Seite zur verdrehsicheren Anlage an einem Klotzhalter und auf der dem Traggitter (7) zugewandten gekrümmten Seite zur formschlüssigen Verbindung mit dem Traggitter (7) jeweils vorstehende Formelemente (5, 6) aufweist, **dadurch gekennzeichnet, dass** die beidseitig vorgesehenen Formelemente (5, 6) napfartig durch Tiefziehen ausgebildet sind.

2. Bremsklotz nach Anspruch 1, **dadurch gekennzeichnet, dass** das Traggitter (7) im Grundriss dem Grundriss der Rückenplatte (4) entspricht.

3. Bremsklotz nach Anspruch 1 oder 2, **dadurch gekennzeichnet, dass** das Traggitter (7) die Rückenplatte (4) vollständig oder nahezu vollständig überdeckt.

4. Bremsklotz nach einem der vorhergehenden Ansprüche, **dadurch gekennzeichnet, dass** auf der dem Traggitter (7) abgewandten Seite der Rückenplatte (4) Positionsbolzen (8) durch Tiefziehen napfartig ausgebildet sind.

5. Bremsklotz nach einem der vorhergehenden Ansprüche, **dadurch gekennzeichnet, dass** die Formelemente (6) zur Verbindung mit dem Traggitter (7) endseitig durch Verformen hergestellte Nietköpfe aufweisen.

6. Bremsklotz nach einem der vorhergehenden Ansprüche, **dadurch gekennzeichnet, dass** die Formelemente (5, 6) eine geschlossene Außenfläche aufweisen.

7. Verfahren zur Herstellung eines Bremsklotzes nach einem der vorhergehenden Ansprüche, **dadurch gekennzeichnet, dass** die Formelemente (5, 6) gleichzeitig durch Tiefziehen hergestellt werden.

8. Verfahren nach Anspruch 7, **dadurch gekennzeichnet, dass** die Positionsbolzen (8) und die Formelemente (5, 6) gleichzeitig durch Tiefziehen hergestellt werden.

9. Verfahren nach Anspruch 7 oder 8, **dadurch gekennzeichnet, dass** nach dem Tiefziehen der Formelemente (5, 6) das Traggitter (7) aufgelegt und die zunächst als hohlzylinderförmige Stifte vorliegenden Nieten (6) anschließend unter Bildung eines Nietkopfes verformt werden.

10. Verfahren nach einem der Ansprüche 7 - 9, **dadurch gekennzeichnet, dass** nach der Komplettierung des Belagträgers (2) die Bremsklotzsohle (3) auf das Traggitter (7) aufgebracht und damit verbunden wird.

## Claims

1. A brake shoe for a rail wheel brake, having a pad support (2) that supports a brake shoe sole piece (3) that is curved concavely in longitudinal extension, said pad support (2) having a backplate (4) composed of sheet metal and a supporting grate (7) attached thereto, to which supporting grate (7) the brake shoe sole piece (3) is joined, wherein the backplate (4) has shaped elements (5, 6), projecting in each case, on the side facing away from the supporting grate (7) to allow for twist-proof abutment against a brake shoe holder and on the curved side facing towards the supporting grate (7) to allow for form-fitting connection to the supporting grate (7), **characterised in that** the shaped elements (5, 6) provided on both sides are formed in the manner of cups by deep drawing.

2. Brake shoe according to claim 1, **characterised in that** the outline of the supporting grate (7) corresponds to the outline of the backplate (4).

3. Brake shoe according to claim 1 or 2, **characterised in that** the supporting grate (7) covers the backplate (4) completely or almost completely.

4. Brake shoe according to one of the preceding claims, **characterised in that** on the side of the backplate (4) facing away from the supporting grate (7), positioning bolts (8) are formed in the manner of cups by deep drawing.

5. Brake shoe according to one of the preceding claims, **characterised in that** the shaped elements (6) have, for the purpose of connection to the supporting grate (7), rivet heads produced on the end side by deformation.

6. Brake shoe according to one of the preceding claims, **characterised in that** the shaped elements (5, 6) have a closed outer surface.

7. Method for producing a brake shoe according to one of the preceding claims, **characterised in that** the shaped elements (5, 6) are produced simultaneously by deep drawing.

8. Method according to claim 7, **characterised in that** the positioning bolts (8) and the shaped elements (5, 6) are produced simultaneously by deep drawing.

9. Method according to claim 7 or 8, **characterised in that**, after deep-drawing of the shaped elements (5, 6), the supporting grate (7) is laid in place and the rivets (6), which are initially in the form of hollow cylindrical pins, are subsequently deformed so that they have a rivet head.

10. Method according to one of claims 7 to 9, **characterised in that**, after completion of the pad support (2), the brake shoe sole piece (3) is placed on the supporting grate (7) and joined to it.

## Revendications

1. Sabot de frein pour un frein de roue ferroviaire, comprenant un support (2) de garniture portant une semelle (3) de sabot de frein incurvée de manière concave en étendue longitudinale, qui a une plaque (4) arrière en tôle et un grillage (7) de support, qui y est raccordé et auquel la semelle (3) du sabot de frein est reliée, la plaque (4) arrière ayant du côté loin du grillage (7) de support, pour une application, sans possibilité de tourner, à un appui de sabot et, du côté incurvé tourné vers le grillage (7) de support, pour la liaison à complémentarité de forme avec le grillage (7) de support, respectivement des éléments (5, 6) de forme en saillie, **caractérisé en ce que** les éléments (5, 6) de forme prévus des deux côtés sont constitués à la manière de godets par emboutissage profond.

2. Sabot de frein suivant la revendication 1, **caractérisé en ce que** le grillage (7) de support correspond, en vue en projection sur un plan horizontal, à la vue en projection sur un plan horizontal de la plaque (4) arrière.

3. Sabot de frein suivant la revendication 1 ou 2, **caractérisé en ce que** le grillage (7) de support recouvre complètement ou presque complètement la plaque (4) arrière.

4. Sabot de frein suivant l'une des revendications précédentes, **caractérisé en ce que** du côté, loin du grillage (7) de support, de la plaque (4) arrière sont constitués des tenons (8) de positionnement à la manière de godets par emboutissage profond.

5. Sabot de frein suivant l'une des revendications précédentes, **caractérisé en ce que** les éléments (6) de forme ont, pour la liaison avec le grillage (7) de support, des têtes de rivet fabriquées par déformation du côté de l'extrémité.

6. Sabot de frein suivant l'une des revendications précédentes, **caractérisé en ce que** les éléments (5, 6) de forme ont une surface extérieure fermée.

7. Procédé de fabrication d'un sabot de frein suivant l'une des revendications précédentes, **caractérisé en ce que** l'on fabrique les éléments (5, 6) de forme en même temps par emboutissage profond.

8. Procédé suivant la revendication 7, **caractérisé en ce que** l'on fabrique les tenons (8) de positionnement et les éléments (5, 6) de forme en même temps par emboutissage profond.

9. Procédé suivant la revendication 7 ou 8, **caractérisé en ce qu'**après l'emboutissage profond des éléments (5, 6) de forme, on met le grillage (7) de support et on déforme ensuite, en formant une tête de rivet, les rivets (6) présents d'abord sous la forme de tiges de forme cylindrique creuse.

10. Procédé suivant l'une des revendications 7 à 9, **caractérisé en ce que** l'on met, après que le support (2) de garniture a été complété, la semelle (3) du sabot de frein sur le grillage (7) de support et on l'y relie.
